(19)

Europäisches
Patentamt
European
Patent Office
Office européen
des brevets

(11) **EP 4 299 527 A1**

(12) **EUROPEAN PATENT APPLICATION**
published in accordance with Art. 153(4) EPC

(43) Date of publication:
**03.01.2024 Bulletin 2024/01**

(21) Application number: **22759333.2**

(22) Date of filing: **04.02.2022**

(51) International Patent Classification (IPC):
**C01G 29/00** (2006.01)   **C08K 9/04** (2006.01)
**C08L 101/00** (2006.01)

(52) Cooperative Patent Classification (CPC):
**C01G 29/00; C08K 9/04; C08L 101/00**

(86) International application number:
**PCT/JP2022/004404**

(87) International publication number:
**WO 2022/181293 (01.09.2022 Gazette 2022/35)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **25.02.2021 JP 2021028161**

(71) Applicant: **Tokyo Printing Ink Mfg. Co., Ltd.
Kita-ku
Tokyo 114-0002 (JP)**

(72) Inventor: **TODA, Akehiro
Saitama-shi, Saitama 331-0811 (JP)**

(74) Representative: **Müller, Christian Stefan Gerd
ZSP Patentanwälte PartG mbB
Hansastraße 32
80686 München (DE)**

(54) **BISMUTH OXIDE NANOPARTICLES, DISPERSION THEREOF, RESIN COMPOSITE AND PRODUCTION METHOD**

(57) The present invention relates to bismuth oxide nanoparticles that are surface-treated with a hydroxyl group-free carboxylic acid (a) and a hydroxyl group-containing carboxylic acid (b), as well as a production method for bismuth oxide nanoparticles, including a step of mixing and heating a hydroxyl group-free carboxylic acid (a), a hydroxyl group-containing carboxylic acid (b), and triphenylbismuthine (c).

FIG. 1

**Description**

TECHNICAL FIELD

The present invention relates to bismuth oxide nanoparticles, a dispersion thereof, a resin composite in which the nanoparticles are dispersed in a resin, and a production method therefor.

BACKGROUND ART

In recent years, metal oxide nanoparticles have attracted attention as metal oxide nanoparticles that contribute to achieving the high functionality and high performance of various materials such as an optical material, an electronic component material, a magnetic recording material, a catalyst material, an ultraviolet or near-infrared absorbing material.
Among these, regarding bismuth oxide, Patent Document 1 proposes "a silicone composition for filling consisting of a silicone resin and a nanoparticulate monoclinic alpha-phase bismuth oxide" as a novel silicone composition for filling useful for producing an acoustic lens for ultrasonic imaging or a therapeutic device.
In addition, Patent Document 2 introduces a resin composition containing bismuth oxide nanoparticles, as an energy-curable type resin composition having a high refractive index, which is suitable for an optical lens.

RELATED DOCUMENT

PATENT DOCUMENT

[Patent Document 1] Japanese Unexamined Patent Publication No. 2009-240782
[Patent Document 2] Japanese Unexamined Patent Publication No. 2010-241985

SUMMARY OF THE INVENTION

TECHNICAL PROBLEM

Patent Document 2 does not describe an example using bismuth oxide nanoparticles, and thus the dispersibility or degree of aggregation of the bismuth oxide nanoparticles is not revealed. However, since the commercially available bismuth oxide nanoparticles that are used in Patent Document 1 are aggregated, a diffusion treatment using three rolls is required.
Therefore, an object of the present invention is to provide bismuth oxide nanoparticles that are hardly aggregated and are excellent in dispersibility in an organic solvent, a monomer, a resin, or the like, a dispersion and resin composite thereof, and a production method for the bismuth oxide nanoparticles.

SOLUTION TO PROBLEM

As a result of diligent studies, the inventor of the present invention found that bismuth oxide nanoparticles surface-treated with a carboxylic acid having no hydroxyl group (hereinafter, referred to as a hydroxyl group-free carboxylic acid) and a carboxylic acid having a hydroxyl group (hereinafter, referred to as a hydroxyl group-containing carboxylic acid) are excellent in dispersibility in an organic solvent or the like, whereby the present invention was completed.
That is, the present invention is as follows.

(1) Bismuth oxide nanoparticles that are surface-treated with a hydroxyl group-free carboxylic acid (a) and a hydroxyl group-containing carboxylic acid (b).
(2) The bismuth oxide nanoparticles according to (1), in which the hydroxyl group-free carboxylic acid (a) is an aliphatic monocarboxylic acid or an aromatic monocarboxylic acid.
(3) The bismuth oxide nanoparticles according to (1) or (2), in which the hydroxyl group-free carboxylic acid (a) has 3 or more and 22 or less carbon atoms.
(4) The bismuth oxide nanoparticles according to any one of (1) to (3), in which the hydroxyl group-containing carboxylic acid (b) is a hydroxyl group-containing aliphatic monocarboxylic acid.
(5) The bismuth oxide nanoparticles according to (4), in which the hydroxyl group-containing aliphatic monocarboxylic acid is a monohydroxyaliphatic monocarboxylic acid.
(6) The bismuth oxide nanoparticles according to any one of (1) to (5), in which the hydroxyl group-containing carboxylic acid (b) has 6 or more and 22 or less carbon atoms.

(7) The bismuth oxide nanoparticles according to any one of (1) to (6), in which the bismuth oxide nanoparticles have an average particle diameter of 1 to 20 nm.

(8) The bismuth oxide nanoparticles according to any one of (1) to (7), in which an amount of surface treatment is 5% to 50% by mass with respect to a total amount of the bismuth oxide nanoparticles.

(9) A bismuth oxide nanoparticle dispersion that is obtained by dispersing the bismuth oxide nanoparticles according to any one of (1) to (8) in a dispersion medium containing at least one selected from an organic solvent, a monomer, and a polymerizable oligomer.

(10) A resin composite that is obtained by dispersing the bismuth oxide nanoparticles according to any one of (1) to (8) in a resin.

(11) A production method for bismuth oxide nanoparticles, including a step of mixing and heating a hydroxyl group-free carboxylic acid (a), a hydroxyl group-containing carboxylic acid (b), and triphenylbismuthine (c).

(12) The production method for bismuth oxide nanoparticles according to (11), in which the hydroxyl group-free carboxylic acid (a) is an aliphatic monocarboxylic acid or an aromatic monocarboxylic acid.

(13) The production method for bismuth oxide nanoparticles according to (11) or (12), in which the hydroxyl group-containing carboxylic acid (b) is a hydroxyl group-containing aliphatic monocarboxylic acid.

(14) The production method for bismuth oxide nanoparticles according to (13), in which the hydroxyl group-containing aliphatic monocarboxylic acid is a monohydroxyaliphatic monocarboxylic acid.

(15) The production method for bismuth oxide nanoparticles according to any one of (11) to (14), in which in the step of the mixing and the heating, the triphenylbismuthine (c) is 40 to 100 parts by mass with respect to 100 parts by mass of a total amount of the hydroxyl group-free carboxylic acid (a) and the hydroxyl group-containing carboxylic acid (b).

ADVANTAGEOUS EFFECTS OF INVENTION

The bismuth oxide nanoparticles according to the present invention are hardly aggregated and are excellent in dispersibility in an organic solvent, a monomer, a polymerizable oligomer, a resin, or the like. As a result, in a case of dispersing the bismuth oxide nanoparticles in a monomer or polymerizable oligomer and then carrying out polymerization, it is possible to achieve an application to an optical material. In addition, it is possible to impart a function to a resin by being dispersed in the resin or to improve optical or mechanical properties.

BRIEF DESCRIPTION OF THE DRAWINGS

Fig. 1 is a graph showing XRD (the upper part) of Example 2 and XRD from a crystal structure database (the lower part).
Fig. 2 is a graph showing an FT-IR spectrum of Example 2.

DESCRIPTION OF EMBODIMENTS

Hereinafter, embodiments for carrying out the present invention will be described in detail. It is noted that the present embodiment is merely one form for carrying out the present invention, the present invention is not limited by the present embodiment, and thus various modifications of embodiments can be made without departing from the gist according to the present invention.

Bismuth oxide nanoparticles according to the present embodiment are surface-treated with a hydroxyl group-free carboxylic acid (a) and a hydroxyl group-containing carboxylic acid (b).

The hydroxyl group-free carboxylic acid (a) is a compound that has one or more carboxylic acids in the molecule but does not have a hydroxyl group.

Examples of the hydroxyl group-free carboxylic acid (a) include an aliphatic monocarboxylic acid and an aromatic monocarboxylic acid. In a case where the hydroxyl group-free carboxylic acid (a) is aliphatic, specific examples thereof include, regardless of being saturated or unsaturated, monocarboxylic acids having 3 to 22 carbon atoms, which may be branched or may have an aromatic substituent such as a phenyl group. Among them, an aliphatic monocarboxylic acid is preferable in consideration of the dispersibility in an organic solvent, a monomer, or the like. More specific examples thereof include a saturated monocarboxylic acid such as propionic acid, butyric acid, valeric acid, caproic acid, caprylic acid (octanoic acid), octylic acid, pelargonic acid, capric acid, neodecanoic acid, undecanoic acid, lauric acid, tridecanoic acid, myristic acid, pentadecanoic acid, palmitic acid, heptadecanoic acid, stearic acid, nonadecanic acid, eicosanoic acid, heneicosanoic acid, or docosanoic acid; and an unsaturated fatty acid such as oleic acid, linoleic acid, linolenic acid, or a fatty acid obtained by subjecting fish oil to saponification and decomposition, and a geometric isomer thereof. Among them, an aliphatic monocarboxylic acid having 3 to 22 carbon atoms is preferable, an aliphatic monocarboxylic acid having 4 to 15 carbon atoms is more preferable, and an aliphatic monocarboxylic acid having 6 to 10 carbon atoms is still more preferable.

The hydroxyl group-containing carboxylic acid (b) is a compound having one or more carboxylic acids and one or more hydroxyl groups in the molecule.

Examples of the hydroxyl group-containing carboxylic acid (b) include, regardless of being saturated or unsaturated, carboxylic acids which may be branched or may have an aromatic substituent such as a phenyl group. Among them, a hydroxyl group-containing aliphatic monocarboxylic acid having 6 to 22 carbon atoms is preferable, and a monohydroxyaliphatic carboxylic acid is more preferable. Specific examples include 2-hydroxydecanoic acid, 3-hydroxyhexanoic acid, 2-hydroxystearic acid, 12-hydroxystearic acid, and ricinoleic acid.

The hydroxyl group-free carboxylic acid (a) imparts hydrophobicity to the surface of the bismuth oxide nanoparticle and contributes to the dispersion stability of the bismuth oxide nanoparticle in an organic solvent or the like. On the other hand, the hydroxyl group of the hydroxyl group-containing carboxylic acid (b) is conceived to contribute to the stability of the dispersion through the hydrogen bonding with a carbonyl group, particularly in a case where the dispersion medium is an organic solvent, monomer, or polymerizable oligomer having a carbonyl group.

It is noted that the surface treatment in the present embodiment is intended to impart dispersion stability to the bismuth oxide particle by forming a hydrophobic group on the surface of the bismuth oxide particle while imparting hydrophobicity to the bismuth oxide particle by forming a hydrophobic group on the surface of the bismuth oxide particle. In addition, the fact that the bismuth oxide nanoparticles according to the present embodiment are surface-treated with a hydroxyl group-free carboxylic acid (a) and a hydroxyl group-containing carboxylic acid (b) can be confirmed, for example, by carrying out an IR measurement of bismuth oxide particles and observing peaks of CH stretching of an alkane and $COO^-$ stretching of a carboxylate anion.

A production method for bismuth oxide nanoparticles according to the present embodiment includes a step of mixing and heating a hydroxyl group-free carboxylic acid (a), a hydroxyl group-containing carboxylic acid (b), and triphenylbismuthine (c).

Specifically, the hydroxyl group-free carboxylic acid (a) and the hydroxyl group-containing carboxylic acid (b) are mixed, the triphenylbismuthine (c) is added thereto, followed by heating and stirring, and purification is carried out according to a conventional method, whereby bismuth oxide nanoparticles can be obtained. Examples of the purification method include a method of adding a poor solvent to an obtained reaction solution to cause reprecipitation, filtering the obtained precipitate, and drying it.

The mixing ratio (in terms of mass ratio) of the hydroxyl group-free carboxylic acid (a) to the hydroxyl group-containing carboxylic acid (b) is preferably (a):(b) = 1:9 to 9:1, more preferably (a):(b) = 3:7 to 7:3, still more preferably (a):(b) = 4:6 to 6:4, and even still more preferably (a):(b) = 4.5:5.5 to 5.5:4.5.

In addition, the adding amount of the triphenylbismuthine (c) with respect to 100 parts by mass of the total amount of the hydroxyl group-free carboxylic acid (a) and the hydroxyl group-containing carboxylic acid (b) is preferably 40 to 100 parts by mass, more preferably 50 to 80 parts by mass, and still more preferably 60 to 75 parts by mass.

In addition, the heating temperature is not particularly limited; however, it is preferably 80°C to 200°C and more preferably 90°C to 150°C. In a case of setting the heating temperature within the above range, it is possible to favorably treat the surface of the bismuth oxide particle with the hydroxyl group-free carboxylic acid (a) and the hydroxyl group-containing carboxylic acid (b). In addition, the heating time is adjusted as appropriate; however, it is, for example, preferably 1 to 10 hours, more preferably 2 to 8 hours, and still more preferably 3 to 7 hours.

The bismuth oxide nanoparticles obtained in this way are monodispersed to have a particle diameter of several nanometers to several tens of nanometers. However, the average particle diameter thereof is preferably 1 to 20 nm and more preferably 1 to 10 nm in consideration of the transparency of the dispersion.

It is noted that in the present embodiment, the average particle diameter of the bismuth oxide nanoparticles shall be equivalent to the value of the crystallite size which is determined from the powder X-ray diffraction (XRD) data according to the Scherrer's equation. That is, the crystallite size that is calculated from the width of the diffraction peak of the powder X-ray diffraction data can be used as the average particle diameter.

Since the surfaces of the bismuth oxide nanoparticles according to the present embodiment are treated with the hydroxyl group-free carboxylic acid (a) and the hydroxyl group-containing carboxylic acid (b), the bismuth oxide nanoparticles are excellent in dispersibility in an organic solvent, a monomer, a resin, or the like.

The amount of surface treatment with these carboxylic acids is preferably 5% by mass or more, more preferably 10% by mass or more, still more preferably 20% by mass or more, and even still more preferably 30% by mass or more, with respect to the obtained bismuth oxide nanoparticles. On the other hand, the amount of surface treatment with the carboxylic acid is preferably 50% by mass or less and more preferably 47% by mass or less with respect to the obtained bismuth oxide nanoparticles.

In a case of setting the amount of surface treatment with the carboxylic acid to be equal to or larger than the above-described lower limit value or more, the dispersibility in an organic solvent, a monomer, or the like can be improved. On the other hand, in a case of setting the amount of surface treatment with the carboxylic acid to be equal to or larger than the above-described lower limit value or more, a certain amount of bismuth oxide itself is retained, and the function due to bismuth oxide is easily obtained.

Here, the amount of surface treatment with the carboxylic acid with respect to the bismuth oxide nanoparticles according to the present embodiment shall be the mass reduction rate (in terms of % by mass) of bismuth oxide nanoparticles, before and after the bismuth oxide nanoparticles are subjected to a temperature raise treatment to 800°C at a rate of 40 °C/min in a nitrogen atmosphere. That is, since the carboxylic acid on the surface of the bismuth oxide nanoparticle is removed by the high-temperature treatment, the amount of surface treatment with the carboxylic acid can be specified by measuring the amount of mass reduction of the particles.

Further, since the bismuth oxide nanoparticles according to the present embodiment have a hydrophobized surface and are hardly aggregated, they are excellent in dispersibility in an organic solvent, a monomer, a resin, or the like. Therefore, for example, in a case of using an ultrasonic homogenizer, not only it is possible to easily disperse the bismuth oxide nanoparticles uniformly in an organic solvent but also it is possible to obtain a resin composite in which the bismuth oxide nanoparticles are finely dispersed in a resin, by dispersing the bismuth oxide nanoparticles in a monomer or a polymerizable oligomer and then carrying out polymerization or by dispersing the bismuth oxide nanoparticles in a resin.

It is noted that the bismuth oxide dispersion and the resin composite according to the present embodiments may contain an antioxidant, a mold release agent, a polymerization initiator, a dye, a pigment, a dispersing agent, and the like, depending on the intended purpose.

As the organic solvent, for example, the following solvents can be suitably used: alcohols such as ethanol, 2-propanol, butanol, octanol, and cyclohexanol; esters such as ethyl acetate, butyl acetate, ethyl lactate, propylene glycol monomethyl ether acetate, propylene glycol monoethyl ether acetate, and γ butyrolactone; ethers such as diethyl ether, tetrahydrofuran, ethylene glycol monomethyl ether, ethylene glycol monoethyl ether, ethylene glycol monobutyl ether, diethylene glycol monomethyl ether, diethylene glycol monoethyl ether, and dioxane; ketones such as acetone, methyl ethyl ketone, methyl isobutyl ketone, acetylacetone, and cyclohexanone; aromatic hydrocarbons such as benzene, toluene, xylene, and ethylbenzene; and amides such as dimethylformamide, N,N-dimethylacetoacetamide, and N-methylpyrrolidone. One or more of these solvents can be used.

As the monomer and the polymerizable oligomer, it is possible to use any one which has radical polymerizability, polycondensation polymerizability, ring-opening polymerizability, or the like. For example, it is possible to suitably use as the radically polymerizable monomer, a (meth)acrylic monomer such as methyl acrylate or methyl methacrylate, a (meth)acrylic monomer having a reactive functional group such as a glycidyl group, an isocyanate group, or a vinyl ether group, a vinyl-based monomer such as styrene, or the like; as the polycondensation-polymerizable monomer, a monomer forming polyamide or polyester, a combination of a polyisocyanate with each of a polyol and a polythiol, or the like; and as the ring-opening polymerizable monomer, an epoxy-based monomer. In addition, as the polymerizable oligomer, it is possible to suitably use a urethane acrylate-based oligomer, an epoxy acrylate-based oligomer, an acrylate-based oligomer, or the like.

It is noted that (meth)acrylate is used to indicate both acrylate and methacrylate.

The bismuth oxide nanoparticles according to the present embodiment are dispersed in a monomer or a polymerizable oligomer, followed by polymerization, or are dispersed in a resin, whereby a resin composite can be obtained; however, due to having excellent dispersibility, they are suitably used for a use application in which transparency is required, a use applications for improving mechanical properties, and the like.

Here, as the resin in which the bismuth oxide nanoparticles according to the present embodiment are dispersed, it is possible to preferably use one or two or more selected from thermoplastic resins, for example, polyolefins such as polyethylene and polypropylene, polyester such as polylactic acid and polyethylene terephthalate, polyamide, poly(meth)acrylate, polyphenylene ether, polyurethane, polystyrene, cyclic polyolefin, and polycarbonate.

Examples

Hereinafter, the present invention will be described in more specifically with reference to Examples and Comparative Examples; however, the present invention is not limited thereto. It is noted that % in Examples and Comparative Examples means % by mass.

(Measurement of average particle diameter)

For the average particle diameter of the bismuth oxide nanoparticles obtained in Examples and Comparative Examples below, using an X-ray diffractometer (manufactured by Rigaku Corporation, a fully automatic multi-purpose X-ray diffractometer SmartLab) under the measurement conditions of an X-ray tube voltage of 40 kV, an X-ray tube current of 30 mA, a scanning range 2θ of 10.0 to 65.0°, the half-value width β was determined from the diffraction intensity due to the (200) plane near 2θ = 32.67° in the X-ray diffraction measurement, the crystallite diameter D was determined by setting the Scherrer constant K to 0.9 and the wavelength λ of the X-ray tube to 1.54059 in the following Scherrer equation of [Equation 1], and the determined crystallite diameter D was taken as the value of the average particle diameter.

$$[Equation\ 1]$$

$$D = K \cdot \lambda / (\beta \cdot \cos\ \theta)$$

(Evaluation of dispersibility)

The dispersibility was evaluated for the bismuth oxide powders obtained in Examples and Comparative Examples below. Specifically, regarding the dispersibility in an organic solvent or a monomer, each of the solvents shown in Table 1 (various organic solvents or monomers) was added to the bismuth oxide nanoparticles obtained in each of Examples and Comparative Examples so that the concentration was 10%. After treatment with an ultrasonic cleaner (a single-frequency ultrasonic cleaner MCS-6, manufactured by AS ONE Corporation) for several minutes, visual observation was carried out to evaluate the dispersity such that a case of being transparent was denoted as o, and a case of being clouded or being precipitated was denoted as ×, and the results are shown in Table 1.

(Example 1)

40.5 g of triphenylbismuthine was added to a mixed solution of 29.7 g of octanoic acid and 29.7 g of ricinoleic acid, and the obtained mixture was stirred at 100°C for 5 hours under a nitrogen atmosphere to obtain a transparent solution. After cooling to room temperature, the obtained transparent solution was added to 3 L of acetone and filtered through a filter having a pore size of 0.2 um. The white matter obtained by filtration was subjected to vacuum drying at 60°C for a whole day and night to obtain 37.6 g of a bismuth oxide powder surface-treated with the carboxylic acid.
The amount of surface treatment of the carboxylic acid in the bismuth oxide powder was 45.69% from the mass reduction rate obtained when the temperature raise was carried out to 800°C at a rate of 40 °C/min in a nitrogen atmosphere using a thermal mass measurement device TGA8000, manufactured by PerkinElmer, Inc. In addition, the crystallite diameter of the bismuth oxide powder was 4.5 nm based on XRD.

(Example 2)

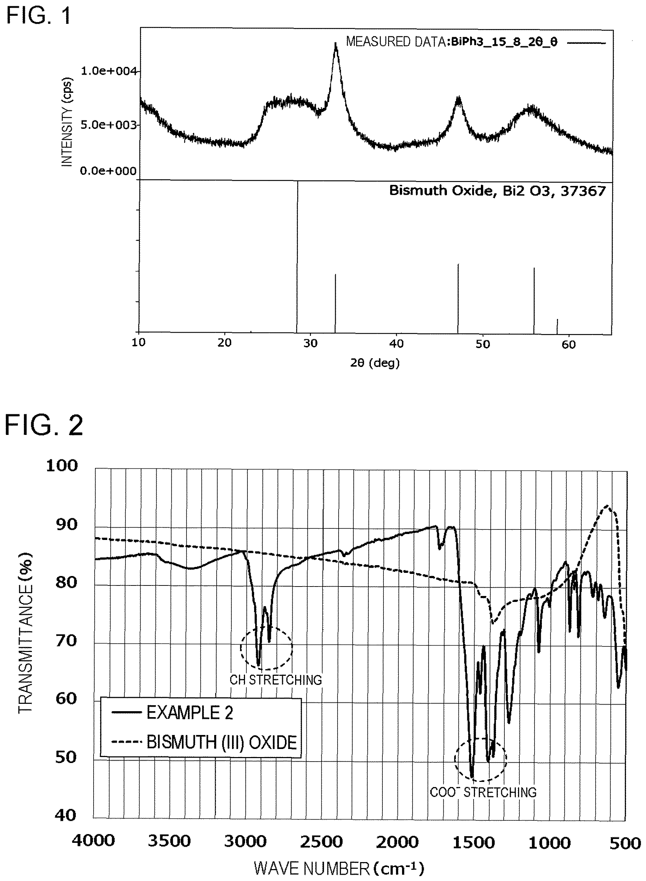

46.3 g of triphenylbismuthine was added to a mixed solution of 26.9 g of propionic acid and 26.9 g of ricinoleic acid, and the obtained mixture was stirred at 100°C for 5 hours under a nitrogen atmosphere to obtain a transparent solution. After cooling to room temperature, the obtained transparent solution was added to 3 L of acetone and filtered through a filter having a pore size of 0.2 um. The white matter obtained by filtration was subjected to vacuum drying at 60°C for a whole day and night to obtain 33.6 g of a bismuth oxide powder surface-treated with the carboxylic acid.
The amount of surface treatment of the carboxylic acid in the bismuth oxide powder was 35.48% from the mass reduction rate obtained when the temperature raise was carried out to 800°C at a rate of 40 °C/min in a nitrogen atmosphere using a thermal mass measurement device TGA8000, manufactured by PerkinElmer, Inc. In addition, the crystallite diameter of the bismuth oxide powder was 5.4 nm based on XRD.
It is noted that the upper part of Fig. 1 shows the X-ray diffraction (XRD) curve of the bismuth oxide nanoparticles of Example 2, and the lower part of Fig. 1 is the diffraction data of bismuth oxide $Bi_2O_3$ from the crystal structure database.
In addition, the bismuth oxide powder surface-treated with the carboxylic acid, which was obtained in Example 2, was subjected to measurement using FT-IR (Bruker infrared spectrometer VERTEX70), and the results are shown in Fig. 2.
From the FT-IR spectrum of Fig. 2, peaks of CH stretching of an alkane and $COO^-$ stretching of a carboxylate anion could be confirmed. As a result, it was confirmed that the carboxylic acid has reacted to form a chemical bond in the state of the carboxylate on the surface of the bismuth oxide particles, and it was shown the bismuth oxide nanoparticles are surface-treated with a hydroxyl group-free carboxylic acid (a) and a hydroxyl group-containing carboxylic acid (b).
Further, for reference, an FT-IR spectrum of the bismuth (III) oxide powder (manufactured by FUJIFILM Wako Pure Chemical Corporation), which is not surface-treated, in Comparative Example 1 described later is also shown in Fig. 2.

(Comparative Example 1)

A bismuth (III) oxide powder (manufactured by FUJIFILM Wako Pure Chemical Corporation), which was not surface-treated, was used.

[Table 1]

| | Solvent | Example 1 | Example 2 | Comparative Example 1 |
|---|---|---|---|---|
| Dispersibility | Toluene | ○ | ○ | × |
| | Methyl ethyl ketone | ○ | × | × |
| | 1-butanol | ○ | ○ | × |
| | Styrene monomer | ○ | ○ | × |
| | Vinyl toluene monomer | ○ | ○ | × |
| | Methyl methacrylate | ○ | × | × |
| | 2-acryloyloxyethyl succinate | ○ | ○ | × |

Table 1 shows the dispersibility of Examples 1 and 2 and Comparative Example 1 in organic solvents. It was found that all Examples have good dispersibility in an organic solvent, a monomer, and the like as compared with Comparative Example.

(Example 3)

· Production of bismuth oxide resin composite

4.3 parts of bismuth oxide nanoparticles of Example 2, 8.6 parts of a vinyl toluene monomer, 0.5 parts of 3-phenoxybenzyl acrylate, and 0.5 parts of 2-acryloyloxyethyl succinate were added to a vial, subjected to ultrasonic dispersion, and mixed until transparent to obtain a mixture. Thereafter, 0.08 part of 2,2'-azobis(2,4-dimethylvaleronitrile) was further added to the mixed solution and allowed to stand in an oven at 65°C for 24 hours under a nitrogen atmosphere to obtain a transparent bismuth oxide-containing resin containing 18.97% of bismuth oxide, that is, a bismuth oxide resin composite.

This application claims priority based on Japanese Patent Application No. 2021-028161 filed on February 25, 2021, and all contents of the disclosure are incorporated herein.

**Claims**

1. Bismuth oxide nanoparticles that are surface-treated with a hydroxyl group-free carboxylic acid (a) and a hydroxyl group-containing carboxylic acid (b).

2. Bismuth oxide nanoparticles according to claim 1,
   wherein the hydroxyl group-free carboxylic acid (a) is an aliphatic monocarboxylic acid or an aromatic monocarboxylic acid.

3. The bismuth oxide nanoparticles according to claim 1 or 2,
   wherein the hydroxyl group-free carboxylic acid (a) has 3 or more and 22 or less carbon atoms.

4. The bismuth oxide nanoparticles according to any one of claims 1 to 3,
   wherein the hydroxyl group-containing carboxylic acid (b) is a hydroxyl group-containing aliphatic monocarboxylic acid.

5. The bismuth oxide nanoparticles according to claim 4,
   wherein the hydroxyl group-containing aliphatic monocarboxylic acid is a monohydroxyaliphatic monocarboxylic acid.

6. The bismuth oxide nanoparticles according to any one of claims 1 to 5,
   wherein the hydroxyl group-containing carboxylic acid (b) has 6 or more and 22 or less carbon atoms.

7. The bismuth oxide nanoparticles according to any one of claims 1 to 6,
   wherein the bismuth oxide nanoparticles have an average particle diameter of 1 to 20 nm.

8. The bismuth oxide nanoparticles according to any one of claims 1 to 7,
   wherein an amount of surface treatment is 5% to 50% by mass with respect to a total amount of the bismuth oxide nanoparticles.

9. A bismuth oxide nanoparticle dispersion that is obtained by dispersing the bismuth oxide nanoparticles according to any one of claims 1 to 8 in a dispersion medium containing at least one selected from an organic solvent, a monomer, and a polymerizable oligomer.

10. A resin composite that is obtained by dispersing the bismuth oxide nanoparticles according to any one of claims 1 to 8 in a resin.

11. A production method for bismuth oxide nanoparticles, comprising:
    a step of mixing and heating a hydroxyl group-free carboxylic acid (a), a hydroxyl group-containing carboxylic acid (b), and triphenylbismuthine (c).

12. The production method for bismuth oxide nanoparticles according to claim 11,
    wherein the hydroxyl group-free carboxylic acid (a) is an aliphatic monocarboxylic acid or an aromatic monocarboxylic acid.

13. The production method for bismuth oxide nanoparticles according to claim 11 or 12,
    wherein the hydroxyl group-containing carboxylic acid (b) is a hydroxyl group-containing aliphatic monocarboxylic acid.

14. The production method for bismuth oxide nanoparticles according to claim 13,
    wherein the hydroxyl group-containing aliphatic monocarboxylic acid is a monohydroxyaliphatic monocarboxylic acid.

15. The production method for bismuth oxide nanoparticles according to any one of claims 11 to 14,
    wherein in the step of the mixing and the heating, the triphenylbismuthine (c) is 40 to 100 parts by mass with respect to 100 parts by mass of a total amount of the hydroxyl group-free carboxylic acid (a) and the hydroxyl group-containing carboxylic acid (b).

FIG. 1

FIG. 2

## INTERNATIONAL SEARCH REPORT

| International application No. |
| --- |
| **PCT/JP2022/004404** |

**A. CLASSIFICATION OF SUBJECT MATTER**

*C01G 29/00*(2006.01)i; *C08K 9/04*(2006.01)i; *C08L 101/00*(2006.01)i
FI:   C01G29/00; C08L101/00; C08K9/04

According to International Patent Classification (IPC) or to both national classification and IPC

**B. FIELDS SEARCHED**

Minimum documentation searched (classification system followed by classification symbols)

C01G29/00; C08K9/04; C08L101/00

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

CAplus/REGISTRY (STN)

**C. DOCUMENTS CONSIDERED TO BE RELEVANT**

| Category* | Citation of document, with indication, where appropriate, of the relevant passages | Relevant to claim No. |
| --- | --- | --- |
| Y | JP 2000-185916 A (NIPPON SHOKUBAI CO., LTD.) 04 July 2000 (2000-07-04)<br>claims 1, 4-6, paragraphs [0010], [0035]-[0037] | 1-15 |
| Y | JP 2016-028998 A (TOKYO PRINTING INK MANUFACTURING CO., LTD.) 03 March 2016 (2016-03-03)<br>claims 1, 4-8, paragraphs [0014], [0038], [0039] | 1-15 |
| Y | JP 2019-210193 A (TOKYO PRINTING INK MANUFACTURING CO., LTD.) 12 December 2019 (2019-12-12)<br>claims 1-8, paragraphs [0009], [0028], [0031] | 1-15 |
| Y | JP 2018-145057 A (TOKYO PRINTING INK MANUFACTURING CO., LTD.) 20 September 2018 (2018-09-20)<br>claims 1-8, paragraphs [0011], [0024], [0025] | 1-15 |
| Y | JP 2010-285304 A (FUJIFILM CORP.) 24 December 2010 (2010-12-24)<br>claims, paragraphs [0017]-[0020] | 11-15 |
| Y | JP 2004-047449 A (MITSUBISHI CHEMICAL CORP.) 12 February 2004 (2004-02-12)<br>claims, paragraphs [0011], [0023] | 11-15 |

☑ Further documents are listed in the continuation of Box C.      ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
| --- | --- |
| **14 March 2022** | **29 March 2022** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**

International application No.

**PCT/JP2022/004404**

### C. DOCUMENTS CONSIDERED TO BE RELEVANT

| Category* | Citation of document, with indication, where appropriate, of the relevant passages | Relevant to claim No. |
|---|---|---|
| A | JP 2010-241985 A (OLYMPUS CORP.) 28 October 2010 (2010-10-28)<br>entire text | 1-15 |
| A | JP 2013-216858 A (NIPPON SHOKUBAI CO., LTD.) 24 October 2013 (2013-10-24)<br>entire text | 1-15 |

Form PCT/ISA/210 (second sheet) (January 2015)

**INTERNATIONAL SEARCH REPORT**
**Information on patent family members**

International application No.

**PCT/JP2022/004404**

| Patent document cited in search report | | | Publication date (day/month/year) | Patent family member(s) | | | Publication date (day/month/year) |
|---|---|---|---|---|---|---|---|
| JP | 2000-185916 | A | 04 July 2000 | (Family: none) | | | |
| JP | 2016-028998 | A | 03 March 2016 | (Family: none) | | | |
| JP | 2019-210193 | A | 12 December 2019 | (Family: none) | | | |
| JP | 2018-145057 | A | 20 September 2018 | (Family: none) | | | |
| JP | 2010-285304 | A | 24 December 2010 | (Family: none) | | | |
| JP | 2004-047449 | A | 12 February 2004 | (Family: none) | | | |
| JP | 2010-241985 | A | 28 October 2010 | (Family: none) | | | |
| JP | 2013-216858 | A | 24 October 2013 | WO entire text CN KR CN | 2013/085062 103987688 10-2014-0117352 105085561 | A1 A A A | |

Form PCT/ISA/210 (patent family annex) (January 2015)

EP 4 299 527 A1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2009240782 A
- JP 2010241985 A

- JP 2021028161 A